# FASCICULE DE BREVET EUROPEEN

(11) **EP 3 198 370 B1**
(45) Date de publication et mention de la délivrance du brevet: **08.05.2019**
(21) Numéro de dépôt: 15757318.9
(22) Date de dépôt: 31.07.2015
(51) Int. Cl.: G06F 3/01, G06F 3/0362

(54) **INTERFACE DE COMMANDE À RETOUR HAPTIQUE POUR VÉHICULE AUTOMOBILE**
STEUERUNGSSCHNITTSTELLE ZUR HAPTISCHEN RÜCKMELDUNG FÜR EIN KRAFTFAHRZEUG
HAPTIC-FEEDBACK CONTROL INTERFACE FOR A MOTOR VEHICLE

(30) Priorité: 31.07.2014 FR 1401765
(43) Date de publication de la demande: 02.08.2017
(73) Titulaire: DAV, 94046 Créteil Cedex (FR)
(72) Inventeur: TISSOT, Jean-Marc, F-94046 Créteil (FR); VANHELLE, Stéphane, F-94046 Créteil Cedex (FR)
(74) Mandataire: Delplanque, Arnaud
(86) Numéro de dépôt international: PCT/FR2015/052129
(87) Numéro de publication internationale: WO 2016/016590

(56) Documents cités:
- DE-A1- 19 528 457
- FR-A1- 2 930 655
- US-A1- 2002 033 795

## Description

La présente invention concerne une interface de commande pour véhicule automobile permettant de transmettre un retour haptique à un utilisateur pour l'informer de la prise en compte d'une commande.

Le retour haptique, généré par exemple à l'utilisateur manipulant une molette, est généralement composé de forces de résistance de valeurs variables, créant des points durs et paliers, correspondant à différentes commandes pour les dispositifs pilotés via l'interface. Le retour haptique est avantageux en voiture car il ne nécessite que peu d'attention de la part du conducteur, en particulier, il ne nécessite pas que le conducteur détourne son regard de la route. Le document FR 2 930 655 A1 décrit dans ce contexte une interface de commande sous la forme d'un bouton rotatif offrant un retour d'effort à l'utilisateur.

Cependant, ces interfaces mécaniques présentent un motif de retour haptique défini, ne pouvant correspondre qu'à un nombre restreint de fonctions à commander. Il faut ainsi multiplier le nombre d'éléments de commande pour obtenir différents motifs de retour haptique.

On cherche aujourd'hui à réaliser des interfaces de commande pouvant gérer un nombre important de fonctions avec un nombre aussi élevé de motifs de retour haptiques, sans être limité à des molettes rotatives, mais pouvant être réalisés en particulier par la manipulation de curseurs (ou « slider » en anglais), déplaçables par l'utilisateur dans une gorge de guidage pouvant être linéaire ou courbe.

A cet effet, la présente invention a pour objet une interface de commande à retour haptique pour véhicule automobile comportant un dispositif de commande muni d'un curseur déplaçable par un utilisateur dans une gorge de guidage, caractérisée en ce que ladite interface de commande comporte un module de fluide magnéto-rhéologique comprenant un élément rotatif, un fluide magnéto-rhéologique en contact avec l'élément rotatif et une unité d'application d'un champ magnétique configurée pour appliquer un champ magnétique au fluide magnéto-rhéologique et pour modifier l'intensité du champ magnétique appliqué, l'élément rotatif du module de fluide magnéto-rhéologique étant raccordé au curseur du dispositif de commande pour générer un retour haptique à l'utilisateur qui déplace le curseur par modification du champ magnétique appliqué au fluide magnéto-rhéologique.

Le fluide magnéto-rhéologique sur lequel un champ magnétique est appliqué présente la propriété que sa viscosité change avec l'intensité du champ magnétique appliqué. L'augmentation de viscosité créé un effort de freinage à l'élément rotatif baignant dans le liquide, permettant la génération d'un retour haptique à l'utilisateur manipulant le curseur relié à l'élément rotatif. Du fait des possibilités quasiment infinies de modification de l'intensité du champ magnétique, un nombre élevé de motifs de retours haptiques peut ainsi être généré. Par ailleurs, le module de fluide magnéto-rhéologique de type rotatif est un module simple à réaliser et peu encombrant. Le raccordement de l'élément rotatif à un curseur déplaçable dans une gorge de guidage permet la génération d'une infinité de retour haptique à l'utilisateur d'un curseur, sans nécessiter la conception spécifique d'un module de fluide rhéologique de type curseur, mais en utilisant des modules de fluide rhéologique de type rotatif existants.

Selon une ou plusieurs caractéristiques de l'interface de commande, prise seule ou en combinaison,
- le curseur est mobile en translation,
- le curseur est mobile autour d'un axe de rotation de l'élément rotatif du module de fluide magnéto-rhéologique,
- l'élément rotatif du module de fluide magnéto-rhéologique est solidaire en rotation avec le curseur du dispositif de commande,
- l'élément rotatif est solidaire en rotation avec le curseur au moyen d'un bras de liaison de l'interface de commande,
- l'élément rotatif du module de fluide magnéto-rhéologique est raccordé au curseur du dispositif de commande au moyen d'un mécanisme d'entraînement,
- l'élément rotatif du module de fluide magnéto-rhéologique est raccordé au curseur du dispositif de commande au moyen d'un mécanisme d'entrainement à engrenages,
- l'élément rotatif du module de fluide magnéto-rhéologique comporte une roue dentée coopérant avec une crémaillère du curseur du dispositif de commande,
- le module de fluide magnéto-rhéologique comporte au moins un organe élastique sollicitant l'élément rotatif contre le dispositif de commande, pour assurer la coopération entre les dentures de l'élément rotatif et du curseur.
- le dispositif de commande comporte au moins un élément élastique sollicitant le curseur dans une position prédéterminée. Les éléments élastiques permettent de rattraper les jeux de fonctionnement.

D'autres caractéristiques et avantages de l'invention ressortiront de la description suivante, donnée à titre d'exemple et sans caractère limitatif, en regard des dessins annexés sur lesquels :
- la figure 1 représente une vue schématique de côté d'une interface de commande pour véhicule automobile,
- la figure 2 représente une vue schématique de dessus de l'interface de la figure 1,
- la figure 3 représente une vue schématique d'un exemple de réalisation d'un module de fluide magnéto-rhéologique de l'interface de commande,
- la figure 4 représente une vue schématique et partielle de dessus d'un deuxième exemple de réalisation d'une interface de commande, et
- la figure 5 représente une vue schématique et partielle de dessus d'un troisième exemple de réalisation d'une interface de commande.

Sur toutes les figures, les mêmes éléments portent les mêmes numéros de référence.

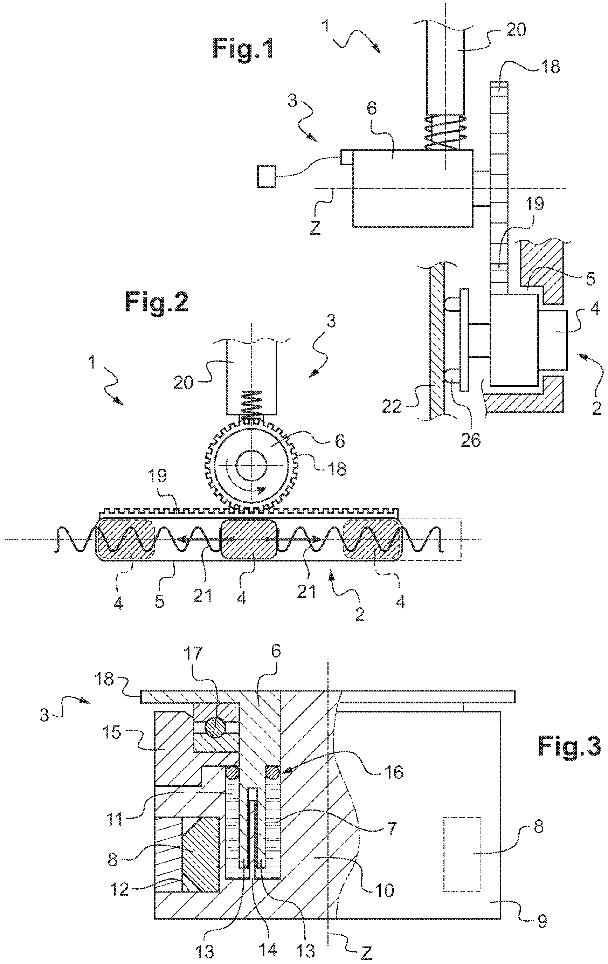

La figure 1 représente une interface de commande 1 à retour haptique pour véhicule automobile, par exemple montée dans le tableau de bord ou dans une console centrale du véhicule, pour commander des systèmes embarqués du véhicule tels que le système de climatisation, de radio, du téléphone, de ventilation ou de navigation. L'interface de commande 1 peut par exemple permettre à un utilisateur d'interagir avec un écran d'affichage par exemple pour naviguer dans menu déroulant, comme dans une liste de contacts téléphoniques ou de morceaux de musique, ou pour faire varier la valeur d'un paramètre, telle que la luminosité, le volume sonore ou la température.

L'interface de commande 1 comporte un dispositif de commande 2 et un module de fluide magnéto-rhéologique 3.

Le dispositif de commande 2 comporte un curseur 4, mobile par « glissement » (ou « slider » en anglais), c'est-à-dire déplaçable par un utilisateur dans une gorge de guidage 5 du dispositif de commande 2, par exemple par pression du doigt. La gorge de guidage 5 peut en outre être pourvue de rails de guidage pour faciliter le déplacement du curseur 4.

Dans le premier exemple de réalisation illustré sur figures 1 et 2, le curseur 4 est mobile en translation, c'est-à-dire qu'il peut être déplacé linéairement dans une gorge de guidage 5 droite (figures 1 et 2).

Le curseur 4 est électriquement raccordé à une carte électronique 22. Il comporte par exemple des peignes de contact 26, par exemple agencés sous la portion manipulable par l'utilisateur du curseur 4. Les peignes de contact 26 sont ainsi mobiles avec le déplacement du curseur 4 dans la gorge de guidage 5, connectant ainsi successivement des contacts de la carte électronique 22.

Le module de fluide magnéto-rhéologique 3 comporte un élément rotatif 6, un fluide magnéto-rhéologique 7 en contact avec l'élément rotatif 6 et une unité d'application 8 d'un champ magnétique configurée pour appliquer un champ magnétique au fluide magnéto-rhéologique 7 et pour modifier l'intensité du champ magnétique appliqué (figure 3).

L'élément rotatif 6 du module de fluide magnéto-rhéologique 3 est raccordé au curseur 4 du dispositif de commande 2 pour générer un retour haptique à l'utilisateur qui déplace le curseur 4 par modification du champ magnétique appliqué au fluide magnéto-rhéologique 7. On désigne par « haptique » un retour par le toucher, tel qu'une force de résistance variable. En effet, le fluide magnéto-rhéologique 7 présente la propriété que sa viscosité varie sous l'effet d'un champ magnétique variable. Ainsi, la force de frottement induite par le fluide magnéto-rhéologique 7 est faible lorsqu'aucun champ magnétique n'est appliqué et devient de plus en plus importante lorsque l'intensité du champ magnétique augmente. Les fluides magnéto-rhéologiques peuvent ainsi être utilisés en tant que freins magnéto-rhéologique. Par exemple, l'application d'une intensité en forme de créneau permet de créer des points durs au niveau des points d'indexage pour lesquels l'intensité est importante.

Selon un exemple de réalisation mieux visible sur la figure 3, le module de fluide magnéto-rhéologique 3 comporte une embase 9 présentant une forme générale cylindrique s'étendant selon un axe de rotation Z du module 3, obturée à l'une de ses extrémités par un axe central fixe 10 orienté selon l'axe de rotation Z, définissant une cavité annulaire 11. L'élément rotatif 6 est monté mobile sur l'embase 9 fixe, autour de l'axe de rotation Z.

La cavité 11 est destinée à recevoir d'une part le fluide magnéto-rhéologique 7 et d'autre part une extrémité de l'élément rotatif 6. L'élément rotatif 6 est alors partiellement immergé dans le fluide magnéto-rhéologique 7. L'embase 9 présente également un logement annulaire 12 qui entoure au moins partiellement la cavité 11. Le logement annulaire 12 reçoit une ou plusieurs bobine(s) qui, avec son (leurs) alimentation(s) (non représentée(s)), forme l'unité d'application 8 d'un champ magnétique sur le fluide magnéto-rhéologique 7.

Le champ magnétique créé par une bobine étant proportionnel au courant qui la traverse, on peut faire varier l'intensité du champ magnétique créé au centre de la bobine en faisant varier l'alimentation de la bobine. La variation de l'intensité du champ magnétique appliqué au fluide magnéto-rhéologique 7, permet de faire varier la viscosité du fluide, et ainsi la force de frottement exercée par le fluide. On peut ainsi faire varier la force avec laquelle l'élément rotatif 6 peut être tourné et donc, la force avec laquelle le curseur 4 peut être déplacé par l'utilisateur, pour générer un retour haptique spécifique à ce dernier.

En outre, la force de frottement appliquée par le fluide magnéto-rhéologique 7 sur l'élément rotatif 6 varie en fonction de la surface de fluide en contact avec l'élément rotatif 6. Ainsi, l'extrémité de l'élément rotatif 6 en contact avec le fluide magnéto-rhéologique 7 peut comporter plusieurs parois d'extrémité 13 cylindriques et concentriques, s'étendant selon l'axe de rotation Z, et venant en regard de parois complémentaires s'étendant depuis le fond de la cavité 11. Par exemple, l'embase 9 comporte une paroi complémentaire 14, venant s'intercaler entre les parois d'extrémité 13 de l'élément rotatif 6 pour augmenter les surfaces en regard entre l'élément rotatif 6 et l'embase 9 et ainsi augmenter le couple de force que l'on peut exercer sur l'élément rotatif 6 avec une alimentation donnée.

Le module de fluide magnéto-rhéologique 3 comporte en outre des joints 16, par exemple intercalés d'une part, entre la cavité 11 et un couvercle 15 fermant la cavité 11 et d'autre part, entre la cavité 11 et un épaulement de l'élément rotatif 6. Les joints 16 assurent l'étanchéité pour éviter toute fuite du fluide magnéto-rhéologique 7 hors de la cavité 11. Le couvercle 15 comprend également un logement recevant un palier ou roulement à bille 17 qui assure la liaison en rotation entre l'embase 9 et l'élément rotatif 6.

Nous allons maintenant décrire la nature de la liaison entre l'élément rotatif 6 du module de fluide magnéto-rhéologique 3 et le curseur 4 du dispositif de commande 2.

L'élément rotatif 6 peut être raccordé au curseur 4 par un mécanisme d'entraînement. On désigne par mécanisme d'entraînement, un mécanisme comportant au moins deux pièces coopérant ensemble de sorte à transformer le mouvement de rotation du module de fluide magnéto-rhéologique 3 en un mouvement de nature différente pour le curseur 4, par exemple de type translatif ou rotatif, ce dernier étant par exemple découplé de l'axe de rotation Z du module de fluide magnéto-rhéologique 3.

Le mécanisme d'entraînement du curseur 4 est par exemple un mécanisme d'engrenages ou un mécanisme d'entraînement par friction ou frottement. Ce mécanisme peut être direct, c'est-à-dire ne comporter que deux pièces coopérant ensemble ou peut être indirect, par exemple en comportant des éléments intermédiaires, tels que des pignons intermédiaires permettant par exemple de démultiplier l'entraînement.

Dans le premier exemple de réalisation illustré sur figures 1 et 2, l'élément rotatif 6 est raccordé au curseur 4 au moyen d'un mécanisme d'entraînement à engrenages. Plus précisément, l'élément rotatif 6 du module de fluide magnéto-rhéologique 3 comporte une roue dentée 18 coopérant avec une crémaillère 19 du curseur 4 du dispositif de commande 2.

La roue dentée 18 pivote autour de l'axe de rotation Z du module de fluide magnéto-rhéologique 3. Elle est par exemple agencée à l'extrémité de l'élément rotatif 6 opposée à l'extrémité baignant dans le fluide magnéto-rhéologique 7 (figure 3). La roue dentée 18 est par exemple solidaire en rotation avec l'élément rotatif 6, ils sont par exemple formés d'une seule pièce.

La crémaillère 19 est mobile avec le curseur 4. Elle par exemple rectiligne et peut en outre être formée d'une seule pièce avec le curseur 4.

Le module de fluide magnéto-rhéologique 3 peut comporter en outre un organe élastique 20, tels qu'un ressort de poussée, sollicitant l'élément rotatif 6 contre le dispositif de commande 2, pour assurer la coopération entre les dentures de l'élément rotatif et du curseur 4 (figure 1).

En outre, le dispositif de commande 2 peut comporter au moins un élément élastique 21 sollicitant le curseur 4 dans une position prédéterminée. Par exemple, le dispositif de commande 2 comporte deux éléments élastiques 21 sollicitant le curseur 4 en position centrale dans la gorge de guidage 5. Les éléments élastiques 21 permettent notamment de rattraper les jeux de fonctionnement.

Différentes formes ou profils de retour haptique peuvent ainsi être obtenus en fonction de la configuration de l'unité d'application 8. Par exemple, l'intensité du champ magnétique peut avoir une forme en créneau dans laquelle l'intensité est nulle ou faible sauf au niveau des positions d'indexage où cette intensité est forte de manière à créer une force de frottement importante générant des points d'indexage. D'autres motifs ou profils de force de résistance en fonction de la position sont également possibles, par exemple des profils triangulaires ou en dents de scie répartis autour des positions d'indexage, de sorte que celles-ci soit perçues comme un point dur progressif à surmonter, une fois pour l'atteindre, et une fois pour s'en éloigner ou seulement pour l'atteindre.

L'unité d'application 8 peut être reconfigurée presque instantanément en appliquant un profil différent ce qui permet en particulier de faire varier la position et/ou le nombre de points durs. Ainsi l'interface de commande 1 peut être utilisée pour plusieurs fonctions différentes, avec des nombres différents de positions d'indexage et des profils ou formes de retour haptique différents.

La résistance du retour haptique peut également être ajustée par l'utilisateur selon s'il désire un retour haptique plus ou moins marqué par exemple en ajustant un paramètre de résistance dans un menu indiquant les réglages.

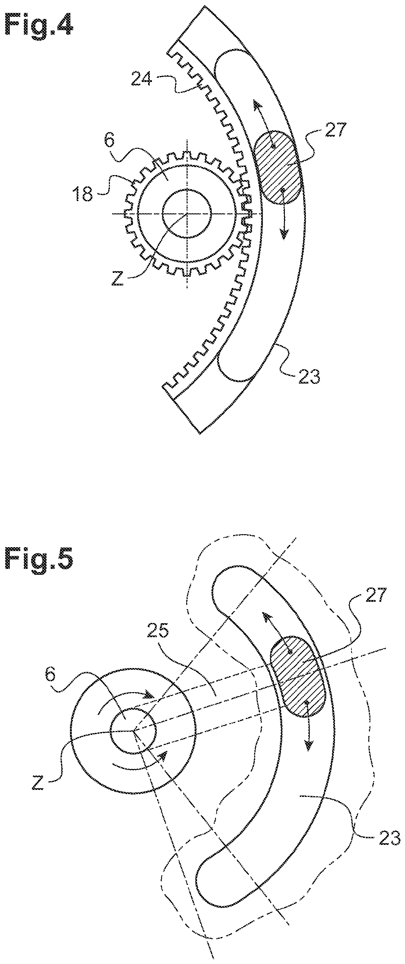

La figure 4 représente un deuxième exemple de réalisation de l'interface de commande. Dans cet exemple, l'élément rotatif 6 du module de fluide magnéto-rhéologique 3 est également raccordé au curseur 27 du dispositif de commande 2 au moyen d'un mécanisme d'entraînement à engrenages.

Cet exemple de réalisation se distingue du premier exemple de réalisation par le curseur 27 qui est mobile en rotation autour de l'axe de rotation Z de l'élément rotatif 6. Le curseur 27 peut ainsi être déplacé dans une gorge de guidage 23 présentant une forme en arc de cercle. En complément, on prévoit par exemple que la crémaillère 24 du curseur 27 s'inscrit dans une forme correspondante en arc de cercle. Le curseur 27 se déplace alors selon une trajectoire courbe.

La figure 5 représente un troisième exemple de réalisation de l'interface de commande. Dans cet exemple, le curseur 27 est également mobile en rotation autour de l'axe de rotation Z de l'élément rotatif 6. Cet exemple de réalisation se différencie du deuxième exemple de réalisation par la nature de la liaison entre l'élément rotatif 6 du module de fluide magnéto-rhéologique 3 et le curseur 27 du dispositif de commande 2. Dans cet exemple, l'élément rotatif 6 est solidaire en rotation avec le curseur 27.

Selon un exemple de réalisation, l'élément rotatif 6 est solidaire en rotation avec le curseur 27 au moyen d'un bras de liaison 25 de l'interface de commande raccordant l'élément rotatif 6 au curseur 27. Le curseur 27 et l'élément rotatif 6, et le cas échéant le bras de liaison 25, sont par exemple formés d'une seule pièce ou sont clipsés ou raccordés par une goupille ou par tout autre moyen de fixation connu.

On comprend donc que le raccordement de l'élément rotatif 6 au curseur 4 ; 27 permet la génération d'une infinité de retour haptique à l'utilisateur manipulant le curseur 4 ; 27, sans nécessiter de développer un module de fluide rhéologique de type curseur mais en utilisant les modules de fluide rhéologique de type rotatifs déjà existants.

## Revendications

1. Interface de commande à retour haptique pour véhicule automobile comportant un dispositif de commande (2) muni d'un curseur (4 ; 27) déplaçable par un utilisateur dans une gorge de guidage (5 ; 23), **caractérisée en ce que** ladite interface de commande comporte un module de fluide magnéto-rhéologique (3) comprenant un élément rotatif (6), un fluide magnéto-rhéologique (7) en contact avec l'élément rotatif (6) et une unité d'application d'un champ magnétique (8) configurée pour appliquer un champ magnétique au fluide magnéto-rhéologique (7) et pour modifier l'intensité du champ magnétique appliqué, l'élément rotatif (6) du module de fluide magnéto-rhéologique (3) étant raccordé au curseur (4 ; 27) du dispositif de commande (2) pour générer un retour haptique à l'utilisateur qui déplace le curseur (4 ; 27) par modification du champ magnétique appliqué au fluide magnéto-rhéologique.

2. Interface de commande selon la revendication 1, **caractérisée en ce que** le curseur (4) est mobile en translation.

3. Interface de commande selon la revendication 1, **caractérisée en ce que** le curseur (27) est mobile autour d'un axe de rotation (Z) de l'élément rotatif (6) du module de fluide magnéto-rhéologique (3).

4. Interface de commande selon la revendication précédente, **caractérisée en ce que** l'élément rotatif (6) du module de fluide magnéto-rhéologique (3) est solidaire en rotation avec le curseur (27) du dispositif de commande (2).

5. Interface de commande selon la revendication précédente, **caractérisée en ce que** l'élément rotatif (6) est solidaire en rotation avec le curseur (27) au moyen d'un bras de liaison (25) de l'interface de commande.

6. Interface de commande selon l'une des revendications 1 à 3, **caractérisée en ce que** l'élément rotatif (6) du module de fluide magnéto-rhéologique (3) est raccordé au curseur (4) du dispositif de commande (2) au moyen d'un mécanisme d'entraînement.

7. Interface de commande selon la revendication précédente, **caractérisée en ce que** l'élément rotatif (6) du module de fluide magnéto-rhéologique (3) est raccordé au curseur (4) du dispositif de commande (2) au moyen d'un mécanisme d'entrainement à engrenages.

8. Interface de commande selon la revendication précédente, **caractérisée en ce que** l'élément rotatif (6) du module de fluide magnéto-rhéologique (3) comporte une roue dentée (18) coopérant avec une crémaillère (19 ; 24) du curseur (27) du dispositif de commande (2).

9. Interface de commande selon l'une des revendications 6 à 8, **caractérisée en ce que** le module de fluide magnéto-rhéologique (3) comporte au moins un organe élastique (20) sollicitant l'élément rotatif (6) contre le dispositif de commande (2).

10. Interface de commande selon l'une des revendications précédentes, **caractérisée en ce que** le dispositif de commande (2) comporte au moins un élément élastique (21) sollicitant le curseur (4) dans une position prédéterminée.

## Patentansprüche

1. Steuerungsschnittstelle mit haptischer Rückmeldung für Kraftfahrzeug, die eine Steuervorrichtung (2) umfasst, die mit einem Cursor (4; 27) versehen ist, der von einem Benutzer in einer Führungsnut (5; 23) verlagerbar ist, **dadurch gekennzeichnet, dass** die Steuerungsschnittstelle ein magneto-rheologisches Fluidmodul (3) umfasst, das ein Drehelement (6) umfasst, ein magneto-rheologisches Fluid (7) in Berührung mit dem Drehelement (6) und eine Einheit zum Anlegen eines Magnetfelds (8), die konfiguriert ist, um ein Magnetfeld an das magneto-rheologische Fluid (7) anzulegen und um die Stärke des angelegten Magnetfelds zu ändern, wobei das Drehelement (6) des magneto-rheologischen Fluidmoduls (3) an den Cursor (4; 27) der Steuervorrichtung (2) angeschlossen ist, um eine haptische Rückmeldung zu dem Benutzer, der den Cursor (4; 27) verlagert, durch Änderung des Magnetfelds, das an das magneto-rheologische Fluid angelegt wird, zu erzeugen.

2. Steuerungsschnittstelle nach Anspruch 1, **dadurch gekennzeichnet, dass** der Cursor (4) in Verschiebung beweglich ist.

3. Steuerungsschnittstelle nach Anspruch 1, **dadurch gekennzeichnet, dass** der Cursor (27) um eine Rotationsachse (Z) des drehenden Elements (6) des magneto-rheologischen Fluidmoduls (3) beweglich ist.

4. Steuerungsschnittstelle nach dem vorstehenden Anspruch, **dadurch gekennzeichnet, dass** das Drehelement (6) des magneto-rheologischen Fluidmoduls (3) fest in Drehung mit dem Cursor (27) der Steuervorrichtung (2) verbunden ist.

5. Steuerungsschnittstelle nach dem vorstehenden Anspruch, **dadurch gekennzeichnet, dass** das drehende Element (6) in Drehung mit dem Cursor (27) mittels eines Verbindungsarms (25) der Steuerungsschnittstelle fest verbunden ist.

6. Steuerungsschnittstelle nach einem der Ansprüche 1 bis 3, **dadurch gekennzeichnet, dass** das drehende Element (6) des magneto-rheologischen Fluidmoduls (3) mit dem Cursor (4) der Steuervorrichtung (2) mittels eines Antriebsmechanismus verbunden ist.

7. Steuerungsschnittstelle nach dem vorstehenden Anspruch, **dadurch gekennzeichnet, dass** das Drehelement (6) des magneto-rheologischen Fluidmoduls (3) mit dem Cursor (4) der Steuervorrichtung (2) mittels eines Antriebsmechanismus mit Ritzeln verbunden ist.

8. Steuerungsschnittstelle nach dem vorstehenden Anspruch, **dadurch gekennzeichnet, dass** das drehende Element (6) des magneto-rheologischen Fluidmoduls (3) ein Zahnrad (18) umfasst, das mit einer Zahnstange (19; 24) des Cursors (27) der Steuervorrichtung (2) zusammenwirkt.

9. Steuerungsschnittstelle nach einem der Ansprüche 6 bis 8, **dadurch gekennzeichnet, dass** das magneto-rheologische Steuermodul (3) mindestens ein elastisches Element (20) umfasst, das das drehende Element (6) gegen die Steuervorrichtung (2) beansprucht.

10. Steuerungsschnittstelle nach einem der vorstehenden Ansprüche, **dadurch gekennzeichnet, dass** die Steuervorrichtung (2) mindestens ein elastisches Element (21) umfasst, das den Cursor (4) in eine vorbestimmten Position beansprucht.

## Claims

1. Control interface with haptic feedback for a motor vehicle comprising a control device (2) provided with a cursor (4; 27) that can be displaced by a user in a guiding groove (5; 23), **characterized in that** said control interface comprises a magnetorheological fluid module (3) comprising a rotary element (6), a magnetorheological fluid (7) in contact with the rotary element (6) and a unit for applying a magnetic field (8) configured to apply a magnetic field to the magnetorheological fluid (7) and to modify the intensity of the magnetic field applied, the rotary element (6) of the magnetorheological fluid module (3) being coupled to the cursor (4; 27) of the control device (2) to generate haptic feedback to the user who displaces the cursor (4; 27) by modification of the magnetic field applied to the magnetorheological fluid.

2. Control interface according to Claim 1, **characterized in that** the cursor (4) is translationally mobile.

3. Control interface according to Claim 1, **characterized in that** the cursor (27) is mobile about an axis of rotation (Z) of the rotary element (6) of the magnetorheological fluid module (3).

4. Control interface according to the preceding claim, **characterized in that** the rotary element (6) of the magnetorheological fluid module (3) is secured in rotation with the cursor (27) of the control device (2) .

5. Control interface according to the preceding claim, **characterized in that** rotary element (6) is secured in rotation with the cursor (27) by means of a link arm (25) of the control interface.

6. Control interface according to one of Claims 1 to 3, **characterized in that** the rotary element (6) of the magnetorheological fluid module (3) is coupled to the cursor (4) of the control device (2) by means of a driving mechanism.

7. Control interface according to the preceding claim, **characterized in that** the rotary element (6) of the magnetorheological fluid module (3) is coupled to the cursor (4) of the control device (2) by means of a gear-based driving mechanism.

8. Control interface according to the preceding claim, **characterized in that** the rotary element (6) of the magnetorheological fluid module (3) comprises a toothed wheel (18) cooperating with a rack (19; 24) of the cursor (27) of the control device (2).

9. Control interface according to one of Claims 6 to 8, **characterized in that** the magnetorheological fluid module (3) comprises at least one elastic member (20) stressing the rotary element (6) against the control device (2).

10. Control interface according to one of the preceding claims, **characterized in that** the control device (2) comprises at least one elastic element (21) stressing the cursor (4) into a predetermined position.
